# EUROPEAN PATENT APPLICATION

(11) **EP 4 811 008 A1**
(43) Date of publication of application: **23.09.2026**
(21) Application number: 24891453.3
(22) Date of filing: 14.11.2024
(51) Int. Cl.: G02B 5/30, B32B 27/18, B32B 27/34, G02B 1/04

(54) **POLARIZING LAMINATE AND OPTICAL LENS**

(30) Priority: 16.11.2023 JP 2023195129
(71) Applicant: Daicel-Evonik Corporation, Tokyo 163-0913 (JP)
(72) Inventor: FUJINAKA, Toshihiko, Tokyo 163-0913 (JP); FUJIKI, Daisuke, Tokyo 163-0913 (JP)
(74) Representative: Grünecker Patent- und Rechtsanwälte PartG mbB
(86) International application number: PCT/JP2024/040427
(87) International publication number: WO 2025/105417

(57) **Abstract**

Provided is a polarizing laminate in which a first protective layer and a second protective layer are laminated on both surfaces of a polarizing layer via an adhesive layer, the polarizing laminate being characterized in that the polarizing laminate includes a base material layer, the base material layer includes an additive, and the additive satisfies one or more requirements selected from the group consisting of requirements (1) to (3). Requirement (1): the additive includes one or more compounds A selected from the group consisting of stearic acid and a stearate, and the content of the compound A is 10-5000 mass ppm with respect to the base material layer. Requirement (2): the additive includes an ultraviolet absorber, and the content of the ultraviolet absorber is 10-50,000 mass ppm with respect to the base material layer. Requirement (3): the additive includes a heat-resistant stabilizer, and the content of the heat-resistant stabilizer is 10-5000 mass ppm with respect to the base material layer.

## Description

### Technical Field

The present disclosure relates to a polarizing laminate and an optical lens.

### Background Art

Optical lenses are used for antiglare glasses, sunglasses, goggles, prescription glasses, and the like in outdoor activities such as climbing, fishing, and baseball, and in driving of vehicles for the purpose of shielding reflected light from road surfaces, wall surfaces, snow surfaces, water surfaces, and the like. This optical lens has a laminated structure in which a lens body and a polarizing layer are laminated with an adhesive layer interposed therebetween, and a protective layer is usually laminated on a surface of the polarizing layer.

Patent Document 1 discloses, as a polarizing laminate capable of efficiently imparting excellent characteristics with a simple structure, a polarizing laminate including a polarizing sheet layer in which protective layers are laminated on both surfaces of a polarizing layer with an adhesive interposed therebetween, wherein the adhesive includes an adhesive having an isocyanate group or a urethane group, and the protective layer includes a polyamide resin. Also disclosed is a lens including a polarizing laminate including a polarizing sheet layer in which protective layers are laminated on both surfaces of a polarizing layer, and a thermoformable resin layer thermally adhered to at least one of the protective layers, wherein the thermoformable resin layer includes a polyamide resin.

Patent Document 2 discloses a functional lens for mounting in a mounting groove of a frame portion, in which a lens body, an adhesive layer, and an optical functional layer are directly or indirectly laminated in this order, wherein an end surface with respect to the mounting groove is formed in a form in which a top portion is located on a mounting side with respect to the adhesive layer in a thickness direction.

### Citation List

### Patent Document

Patent Document 1: JP 2006-227591 A
Patent Document 2: WO 2016/158680

### Summary of Invention

### Technical Problem

However, the present inventors have conceived that in both the polarizing laminate of Patent Document 1 and the functional lens of Patent Document 2, the resin may be deteriorated by heating in the production process, and may be discolored to brown or black (so-called scorch). Since the polarizing laminate and the lens in which scorch has been generated as described above are incompatible as a product, the yield at the time of production decreases. Thus, there is a need for a polarizing laminate and an optical lens in which scorch is suppressed.

An object of the present disclosure is to provide a polarizing laminate and an optical lens in which scorch is suppressed.

### Solution to Problem

The present disclosure relates to the following contents.
[1] A polarizing laminate comprising:
   a first protective layer; and
   a second protective layer,
   the first protective layer being laminated on a surface of a polarizing layer with an adhesive layer interposed between the polarizing layer and the first protective layer, the second protective layer being laminated on another surface of the polarizing layer with an adhesive layer interposed between the polarizing layer and the second protective layer,
   wherein
   the polarizing laminate includes a substrate layer,
   the substrate layer contains an additive, and
   the additive satisfies one or more requirements selected from the group consisting of Requirements (1) to (3) below:
      Requirement (1): the additive contains one or more compound A selected from the group consisting of stearic acid and a stearate, and a content of the compound A is from 10 to 5000 ppm by mass with respect to the substrate layer;
      Requirement (2): the additive contains an ultraviolet absorber, and a content of the ultraviolet absorber is from 10 to 50000 ppm by mass with respect to the substrate layer; and
      Requirement (3): the additive contains a heat resistant stabilizer, and a content of the heat resistant stabilizer is from 10 to 5000 ppm by mass with respect to the substrate layer.
[2] The polarizing laminate according to [1], wherein
   the additive satisfies Requirement (2), and
   the ultraviolet absorber contains one or more selected from the group consisting of a benzotriazole compound, a triazine compound, and a cyanoacrylate compound.
[3] The polarizing laminate according to [1] or [2], wherein
   the additive satisfies Requirement (3), and
   the heat resistant stabilizer contains one or more selected from the group consisting of a phenol-based antioxidant, a phosphorus-based antioxidant, and a sulfur-based antioxidant.
[4] The polarizing laminate according to any one of [1] to [3], wherein the adhesive layer is a layer containing a cured product of a urethane adhesive.
[5] The polarizing laminate according to any one of [1] to [4], wherein the adhesive layer has a thickness of from 1.0 to 100.0 µm.
[6] The polarizing laminate according to any one of [1] to [5], wherein one or more selected from the group consisting of the first protective layer and the second protective layer contain a polyamide resin.
[7] The polarizing laminate according to [6], wherein the polyamide resin has a structure represented by Formula (4): 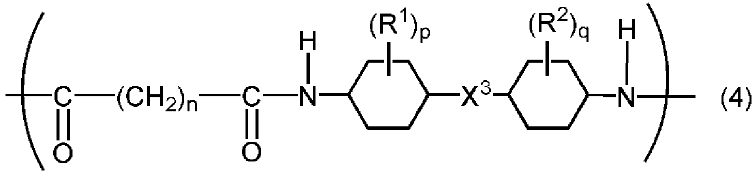 where
   R¹ and R² each independently represent an alkyl group having carbon number of 1 to 4,
   X³ represents an alkylene group having carbon number of 1 to 6,
   n represents an integer of 1 or more, and
   p and q each independently represent an integer of from 0 to 4.
[8] The polarizing laminate according to any one of [1] to [7], wherein one or more selected from the group consisting of the first protective layer and the second protective layer have a retardation value of 300 nm or more.
[9] The polarizing laminate according to any one of [1] to [8], wherein the polarizing layer contains polyvinyl alcohol.
[10] An optical lens comprising the polarizing laminate according to any one of [1] to [9].
[11] The optical lens according to [10], wherein the substrate layer contains a polyamide resin having a structure represented by Formula (4): 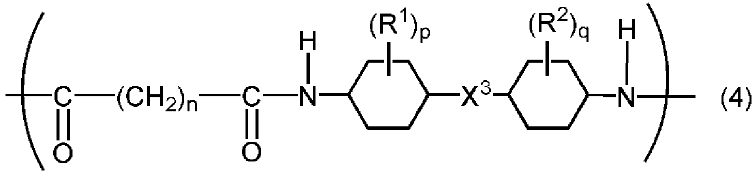 where
   R¹ and R² each independently represent an alkyl group having carbon number of 1 to 4,
   X³ represents an alkylene group having carbon number of 1 to 6,
   n represents an integer of 1 or more, and
   p and q each independently represent an integer of from 0 to 4.

### Advantageous Effects of Invention

The present disclosure can provide a polarizing laminate and an optical lens in which scorch is suppressed.

### Brief Description of Drawings

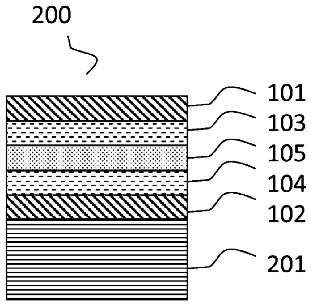

FIG. 1 is a sectional view of a polarizing laminate according to an embodiment of the present disclosure.

### Description of Embodiments

The present disclosure will be described below with reference to specific embodiments. In the present specification, when a lower limit value and an upper limit value of a numerical range are separately indicated, the numerical range can be a combination of any lower limit value and any upper limit value among the range. In the present disclosure, a numerical range expressed using "(from) A to B" means a numerical range including the lower limit and the upper limit which are end points.

### Polarizing Laminate

A polarizing laminate of the present disclosure is a polarizing laminate including a first protective layer; and a second protective layer, the first protective layer being laminated on a surface of a polarizing layer with an adhesive layer interposed between the polarizing layer and the first protective layer, the second protective layer being laminated on another surface of the polarizing layer with an adhesive layer interposed between the polarizing layer and the second protective layer, wherein the polarizing laminate includes a substrate layer, the substrate layer contains an additive, and the additive satisfies one or more requirements selected from the group consisting of Requirements (1) to (3) below.

Requirement (1): the additive contains one or more compound A selected from the group consisting of stearic acid and a stearate, and a content of the compound A is from 10 to 5000 ppm by mass with respect to the substrate layer.

Requirement (2): the additive contains an ultraviolet absorber, and a content of the ultraviolet absorber is from 10 to 50000 ppm by mass with respect to the substrate layer.

Requirement (3): the additive contains a heat resistant stabilizer, and a content of the heat resistant stabilizer is from 10 to 5000 ppm by mass with respect to the substrate layer.

For example, the additive may satisfy Requirement (1), may satisfy Requirement (2), may satisfy Requirement (3), may satisfy Requirements (1) and (2), may satisfy Requirements (1) and (3), may satisfy Requirements (2) and (3), or may satisfy Requirements (1) to (3). Among these, the additive preferably satisfies Requirements (1) and (2).

When the substrate layer contains an additive, and the additive satisfies one or more requirements selected from the group consisting of Requirements (1) to (3), scorch of the substrate layer in the polarizing laminate can be suppressed. Hereinafter, Requirements (1) to (3) will be described in detail.

### Requirement (1)

The additive contains one or more compound A selected from the group consisting of stearic acid and a stearate, and the content of the compound A is from 10 to 5000 ppm by mass with respect to the substrate layer. The content of the compound A with respect to the substrate layer is preferably from 10 to 3000 ppm by mass, more preferably from 10 to 1000 ppm by mass, still more preferably from 10 to 500 ppm by mass, particularly preferably from 10 to 300 ppm by mass, yet particularly preferably from 10 to 200 ppm by mass. When the content is within the above-described range, scorch is less likely to be generated in the substrate layer.

The reason why such an effect is achieved is not clear, but the present inventors presume as follows. The scorch of the polarizing laminate is generated when the resin is deteriorated by heating in the production process. In particular, the resin easily deteriorates in the substrate layer. The compound A can suppress deterioration of the resin due to heating. When the content of the compound A is less than 10 ppm by mass, it is difficult to suppress deterioration of the resin. In addition, blocking of the resin occurs in the production process. When the content of the compound A is more than 5000 ppm by mass, deterioration of the resin can be suppressed, but there is a case where scorch is generated in the substrate layer due to deterioration of the compound A itself.

That is, when the content of the compound A in the substrate layer is within the above-described range, scorch of the substrate layer can be suppressed, and blocking of the resin can be suppressed.

The content of the compound A with respect to the substrate layer can be adjusted by the amount of the compound A to be added at the time of producing the substrate layer. The content of the compound A in the substrate layer can be measured by a known analysis means such as an ICP-spectroscopic analysis (ICP-AES) method.

In the polarizing laminate, the first protective layer is laminated on a surface of the polarizing layer with an adhesive layer interposed between the polarizing layer and the first protective layer, and the second protective layer is laminated on another surface of the polarizing layer with an adhesive layer interposed between the polarizing layer and the second protective layer. The details will be described later. Further, the polarizing laminate may have another layer. When the suppression of scorch in an individual layer of the polarizing laminate is particularly focused, the reference of the content (ppm by mass) of the compound A in Requirement (1) may be the individual layer other than the substrate layer. For example, when the suppression of scorch of the first protective layer in the polarizing laminate is particularly focused, the first protective layer contains an additive, the additive contains one or more compound A selected from the group consisting of stearic acid and a stearate, and the content of the compound A is preferably from 10 to 5000 ppm by mass, more preferably from 10 to 3000 ppm by mass, still more preferably from 10 to 1000 ppm by mass, yet still more preferably from 10 to 500 ppm by mass, particularly preferably from 10 to 100 ppm by mass, yet particularly preferably from 10 to 50 ppm by mass with respect to the first protective layer. The same as the case of the first protective layer can be applied when the second protective layer is focused, when the adhesive layer is focused, and when other layers are focused.

The additive preferably contains a stearate. The stearate is not particularly limited, and examples thereof include monovalent metal salts such as lithium stearate, sodium stearate, and potassium stearate, and divalent metal salts such as magnesium stearate and calcium stearate. Among these, calcium stearate is more preferable.

### Requirement (2)

The additive contains an ultraviolet absorber, and the content of the ultraviolet absorber is from 10 to 50000 ppm by mass with respect to the substrate layer. The content of the ultraviolet absorber with respect to the substrate layer is preferably from 10 to 30000 ppm by mass, more preferably from 10 to 10000 ppm by mass, still more preferably from 10 to 5000 ppm by mass, particularly preferably from 10 to 1000 ppm by mass, yet particularly preferably from 10 to 500 ppm by mass. When the content is within the above-described range, scorch is less likely to be generated in the substrate layer, and the color tone of the substrate layer is also favorable.

The reason why such an effect is achieved is not clear, but the present inventors presume as follows. As described above, scorch of the polarizing laminate is generated when the resin is deteriorated by heating in the production process. In particular, the resin easily deteriorates in the substrate layer. Probably, the ultraviolet absorber is melted by heating and acts as a lubricant in the polarizing laminate production process. This shortens the residence time of the resin as a raw material of the polarizing laminate in the production device and reduces the heat applied to the resin. As a result, deterioration of the resin due to heating is suppressed, and the polarizing laminate is less likely to have scorch.

That is, when the content of the ultraviolet absorber is less than 10 ppm by mass, the function of the ultraviolet absorber as a lubricant becomes insufficient, and it becomes difficult to suppress deterioration of the resin. On the other hand, when the content of the ultraviolet absorber exceeds 50000 ppm by mass, the amount of the ultraviolet absorber melted by heating becomes too large, causing gas generation due to poor dispersion of the ultraviolet absorber, which is not preferable. In addition, the polarizing laminate may be colored due to the color of the ultraviolet absorber.

The content of the ultraviolet absorber in the substrate layer can be adjusted by the amount of the ultraviolet absorber to be added when the substrate layer is produced. The content of the ultraviolet absorber in the substrate layer can be measured by a known analysis means such as a liquid chromatography mass spectrometry (LC/MS) method.

Similarly to Requirement (1), when the suppression of scorch in an individual layer other than the substrate layer of the polarizing laminate is particularly focused, the reference of the content (ppm by mass) of the ultraviolet absorber in Requirement (2) may be the individual layer. For example, when the suppression of scorch of the first protective layer is particularly focused, the first protective layer contains an additive, the additive contains an ultraviolet absorber, and the content of the ultraviolet absorber is preferably from 10 to 50000 ppm by mass, more preferably from 10 to 10000 ppm by mass, still more preferably from 10 to 5000 ppm by mass, particularly preferably from 10 to 1000 ppm by mass, particularly preferably from 10 to 500 ppm by mass with respect to the first protective layer. The same applies to the case of focusing on the second protective layer, the case of focusing on the adhesive layer, and the case of focusing on other layers.

The ultraviolet absorber is not particularly limited as long as it is a compound that absorbs ultraviolet rays, and a known ultraviolet absorber can be used. For example, the ultraviolet absorber includes one or more selected from the group consisting of a benzoxazine compound, a benzophenone compound, a benzotriazole compound, a triazine compound, a salicylic acid compound, and a cyanoacrylate compound. Here, for example, the benzoxazine compound refers to a compound having a benzoxazine skeleton, the benzophenone compound refers to a compound having a benzophenone skeleton, the benzotriazole compound refers to a compound having a benzotriazole skeleton, the triazine compound refers to a compound having a triazine skeleton, the salicylic acid compound refers to a compound having a salicylic acid skeleton, and the cyanoacrylate compound refers to a compound having a cyanoacrylate skeleton.

Among these, the ultraviolet absorber preferably contains one or more selected from the group consisting of a benzotriazole compound, a triazine compound, and a cyanoacrylate compound, more preferably contains a benzotriazole compound. Examples of the benzotriazole compound include a compound represented by the following Formula (A). Specifically, for example, Tinuvin 326 manufactured by BASF Japan Ltd., can be used. That is, the benzotriazole compound may be 2-(5-chloro-2H-benzotriazol-2-yl)-6-(1,1-dimethylethyl)-4-methylphenol.

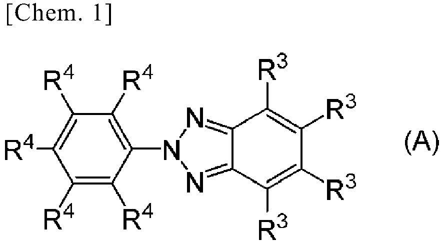

In Formula (A), R³ each independently represent a hydrogen atom, a halogen atom, or an alkyl group having carbon number of 1 to 3, and R⁴ each independently represent a hydrogen atom, a hydroxy group, or an alkyl group having carbon number of 1 to 6 (preferably 1 to 4).

One or more of R³ is preferably a halogen atom. The halogen atom is not particularly limited, but it may be any halogen atom such as a chlorine atom or a bromine atom, and is preferably a chlorine atom. One or more of R⁴ is preferably a hydroxy group. One or more of R⁴ is preferably a tert-butyl group.

The ultraviolet absorber may be a compound having no benzoyl group. For example, when the ultraviolet absorber contains one or more compounds selected from the group consisting of a benzoxazine compound, a benzophenone compound, a benzotriazole compound, a triazine compound, a salicylic acid compound, and a cyanoacrylate compound, the compound may have no benzoyl group. The benzoyl group may have any substituent.

For the ultraviolet absorber, a single type may be used or two or more types may be used in combination.

### Requirement (3)

The additive contains a heat resistant stabilizer, and the content of the heat resistant stabilizer is from 10 to 5000 ppm by mass with respect to the substrate layer. The content of the heat resistant stabilizer in the substrate layer is preferably from 10 to 3000 ppm by mass, more preferably from 10 to 1000 ppm by mass, still more preferably from 10 to 500 ppm by mass, particularly preferably from 10 to 100 ppm by mass, yet particularly preferably from 10 to 50 ppm by mass. When the content is within the above-described range, scorch is less likely to be generated in the substrate layer.

The reason why such an effect is achieved is not clear, but the present inventors presume as follows. As described above, scorch of the polarizing laminate is generated when the resin is deteriorated by heating in the production process. In particular, the resin easily deteriorates in the substrate layer. Probably, the heat resistant stabilizer is melted by heating and traps excessive radicals to stabilize the polymer in the polarizing laminate production process. This shortens the residence time of the resin as a raw material of the polarizing laminate in the production device and reduces the heat applied to the resin. As a result, deterioration of the resin due to heating is suppressed, and the polarizing laminate is less likely to have scorch.

That is, when the content of the heat resistant stabilizer is less than 10 ppm by mass, the function of the heat resistant stabilizer as a lubricant becomes insufficient, and it becomes difficult to suppress deterioration of the resin. On the other hand, when the content of the heat resistant stabilizer exceeds 50000 ppm by mass, the amount of the heat resistant stabilizer melted by heating becomes too large, and the heat resistant stabilizer does not work as a lubricant. Thus, it becomes difficult to suppress deterioration of the resin.

The content of the heat resistant stabilizer in the substrate layer can be adjusted by the amount of the heat resistant stabilizer to be added when the substrate layer is produced. The content of the heat resistant stabilizer in the substrate layer can be measured by a known analysis means such as a liquid chromatography mass spectrometry (LC/MS) method.

Similarly to Requirements (1) and (2), when the suppression of scorch in an individual layer other than the substrate layer of the polarizing laminate is particularly focused, the reference of the content (ppm by mass) of the heat resistant stabilizer in Requirement (3) may be the individual layer. For example, when the suppression of scorch in the first protective layer is particularly focused, the first protective layer contains an additive, the additive contains a heat resistant stabilizer, and the content of the heat resistant stabilizer is preferably from 10 to 5000 ppm by mass, more preferably from 10 to 3000 ppm by mass, still more preferably from 10 to 1000 ppm by mass, yet still more preferably from 10 to 500 ppm by mass, particularly preferably from 10 to 100 ppm by mass, yet particularly preferably from 10 to 50 ppm by mass with respect to the first protective layer. The same applies to the case of focusing on the second protective layer, the case of focusing on the adhesive layer, and the case of focusing on other layers.

The heat resistant stabilizer is not particularly limited as long as it is a compound that functions as a radical scavenger, and a known heat resistant stabilizer can be used. For example, the heat resistant stabilizer contains one or more selected from a phenol-based antioxidant, a phosphorus-based antioxidant, and a sulfur-based antioxidant. Here, the phenol-based antioxidant is an antioxidant having a phenol-based hydroxy group in the molecule. Examples of the phenol-based antioxidant include a compound having a structure represented by the following Formula (B). Specifically, for example, Irganox 1010 manufactured by BASF Japan Ltd., can be used. That is, the phenol-based antioxidant may be pentaerythritol tetrakis[3-(3,5-di-tert-butyl-4-hydroxyphenyl)propionate]. The phosphorus-based antioxidant is an antioxidant having a phosphorus atom in the molecule. The sulfur-based antioxidant is an antioxidant having a sulfur atom in the molecule.

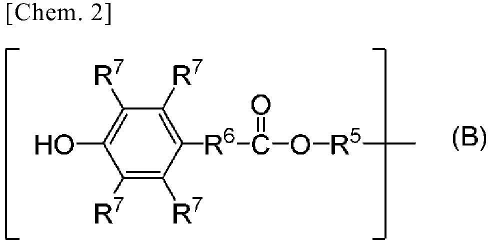

In Formula (B), R⁵ and R⁶ each independently represent an alkylene group having carbon number of 1 to 6 (preferably 1 to 3), and R⁷ each independently represent a hydrogen atom, a hydroxy group, or an alkyl group having carbon number of 1 to 6 (preferably 1 to 4). One or more of R⁷ is preferably a hydroxy group. One or more of R⁷ is preferably a tert-butyl group.

The compound having a structure represented by Formula (B) is preferably a compound having a structure represented by the following Formula (B-1).

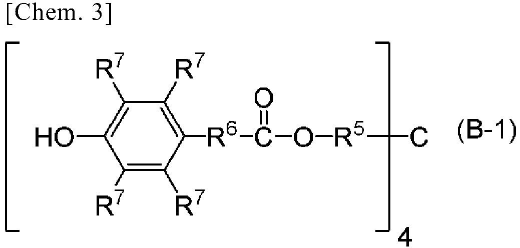

In Formula (B-1), R⁵ and R⁶ each independently represent an alkylene group having carbon number of 1 to 6 (preferably 1 to 3), and R⁷ each independently represent a hydrogen atom, a hydroxy group, or an alkyl group having carbon number of 1 to 6 (preferably 1 to 4). One or more of R⁷ is preferably a hydroxy group. One or more of R⁷ is preferably a tert-butyl group.

The heat resistant stabilizer is preferably a compound having an ester group. The heat resistant stabilizer is preferably a compound having an aromatic ring. The heat resistant stabilizer is preferably a compound composed only of a carbon atom, an oxygen atom, and a hydrogen atom. When the heat resistant stabilizer is a compound having an aromatic ring, the aromatic ring may have any substituent, but preferably has one or more substituents selected from the group consisting of a hydroxy group and an alkyl group having carbon number of 1 to 6.

For the heat resistant stabilizer, one type may be used alone or two or more types may be used in combination.

In a polarizing laminate (200), a first protective layer (101) is laminated on a surface of the polarizing layer (105) with the adhesive layer (103) interposed between the polarizing layer (105) and the first protective layer (101), and the second protective layer (102) is laminated on another surface of the polarizing layer (105) with the adhesive layer (104) interposed between the polarizing layer (105) and the second protective layer (102), as described above (FIG. 1). The polarizing laminate (200) includes a substrate layer (201). The polarizing laminate may have another layer. That is, the polarizing laminate may include a polarizing layer (105), a first adhesive layer (103) provided on a first surface of the polarizing layer, a second adhesive layer (104) provided on a second surface of the polarizing layer, a first protective layer (101) provided on the surface opposite to the surface on which the polarizing layer is located as viewed from the first adhesive layer, and a second protective layer (102) provided on the surface opposite to the surface on which the polarizing layer is located as viewed from the second adhesive layer.

The disposition of the substrate layer (201) is not particularly limited, but the substrate layer (201) may be provided, for example, on the surface opposite to the surface on which the polarizing layer (105) is located as viewed from the first protective layer (101), or may be provided on the surface opposite to the surface on which the polarizing layer (105) is located as viewed from the second protective layer (102). Such a configuration makes it easy to control the adhesive force between the polarizing laminate and the substrate layer. With such a configuration, the protective layer (the first protective layer or the second protective layer) can be used for bonding to the substrate layer. The method for adopting such a configuration is not particularly limited, and an example thereof is a method in which a resin is injection-molded on a laminate in which the first protective layer is laminated on a surface of the polarizing layer with an adhesive layer interposed between the polarizing layer and the first protective layer, and the second protective layer is laminated on another surface of the polarizing layer with an adhesive layer interposed between the polarizing layer and the second protective layer, and the laminate and a substrate layer are bonded to each other by thermal welding.

Another layer may be provided between the substrate layer (201) and the protective layers (first protective layer (101), second protective layer (102)).

Hereinafter, each layer that can constitute the polarizing laminate will be described.

### Polarizing Layer

The polarizing layer is a layer containing a material having polarizability. The polarizing layer is not particularly limited, but for example, a stretched film containing a dichroic compound such as iodine or a dichroic dye and a polarizing resin such as polyvinyl alcohol can be used. The stretched film can be prepared by, for example, subjecting a polyvinyl alcohol film produced by stretching polyvinyl alcohol to a treatment such as a dyeing treatment with a dichroic compound, a crosslinking treatment, or a stretching treatment (uniaxial stretching treatment at a magnification of about 3 to 7 times). That is, the polarizing layer may contain a polarizing resin and may further contain a dichroic compound. The polarizing layer preferably contains polyvinyl alcohol, and more preferably further contains iodine.

The polyvinyl alcohol is not particularly limited, and examples thereof include a saponified product of a polymer of vinyl acetate, a saponified product of a copolymer of vinyl acetate and a copolymerizable monomer other than vinyl acetate (for example, unsaturated carboxylic acid, unsaturated sulfonic acid, and cationic monomer), and derivatives from these saponified products (for example, formal and acetal). Examples of the derivative include polyvinyl acetal and polyvinyl butyral.

The number-average polymerization degree of the polyvinyl alcohol is not particularly limited, and examples thereof include from 1000 to 10000 and from 3000 to 5000. The degree of saponification of the polyvinyl alcohol is not particularly limited, but is preferably 85 mol% or more, more preferably 90 mol% or more (for example, from 90 to 100 mol%), still more preferably 95 mol% or more. Preferable examples include from 90 to 100 mol%, from 95 to 100 mol%, and from 98 to 100 mol%.

The thickness of the polarizing layer is not particularly limited, but it may be, for example, from 5.0 to 100.0 µm, preferably from 10.0 to 80.0 µm, more preferably from 20.0 to 60.0 µm.

### Protective Layer

The protective layers (the first protective layer and the second protective layer) are layers that protect the polarizing layer. The protective layers are not particularly limited as long as they can protect the polarizing layer, and an example thereof is a resin layer. The resin layer may contain one or more selected from the group consisting of a thermoplastic resin and a thermosetting resin, preferably contains a thermoplastic resin, more preferably, the resin layer is composed of a thermoplastic resin. Examples of the thermoplastic resin include an acetyl cellulose resin such as triacetyl cellulose, a polycarbonate resin, a polyamide resin, a polyester resin, an olefin resin, an acrylic resin, and a urethane resin. Among these, a polyamide resin is preferable.

The polyamide resin is not particularly limited, and examples thereof include an aliphatic polyamide resin and an aromatic polyamide resin. The aliphatic polyamide resin may have a linear structure, a branched structure, or a cyclic structure. Among these, the aliphatic polyamide resin preferably has a cyclic structure. That is, the polyamide resin is preferably an alicyclic polyamide resin. The alicyclic polyamide resin is excellent in transparency. The alicyclic polyamide resin is available, for example, as TROGAMID (manufactured by Polyplastics-Evonik Corporation) or Grilamid (manufactured by EMS).

The resin layer may contain a single type of these resins alone or two or more types thereof in combination. The protective layers (the first protective layer and the second protective layer) may contain the same material or different materials. That is, one or more selected from the group consisting of the first protective layer and the second protective layer may contain the above-described materials.

The alicyclic polyamide resin is produced by combining suitable components from among one or more components selected from the group consisting of alicyclic diamines and alicyclic dicarboxylic acids, aliphatic diamines other than alicyclic diamines, aliphatic dicarboxylic acids other than alicyclic dicarboxylic acids, and the like, and performing polymerization using a known method.

Examples of the alicyclic diamine include a compound represented by Formula (1) shown below.
[Chem. 4]

H₂N-A¹-X¹-A²-NH₂ (1)

(In Formula (1), A¹ and A² each independently represent a cycloalkylene group having carbon number of 5 to 10 (preferably 6 to 8, more preferably 6), and X¹ represents an alkylene group having carbon number of 1 to 6 (preferably 1 to 4, more preferably 1 to 3).)

Examples of the alicyclic dicarboxylic acid include a compound represented by Formula (2) shown below.
[Chem. 5]

HOOC-A³-X²-A⁴-COOH (2)

(In Formula (2), A³ and A⁴ each independently represent a cycloalkylene group having carbon number of 5 to 10 (preferably 6 to 8, more preferably 6), and X² represents an alkylene group having carbon number of 1 to 6 (preferably 1 to 4, more preferably 1 to 3).)

When an alicyclic diamine is used, it is preferable to use an aliphatic dicarboxylic acid other than alicyclic dicarboxylic acids (hereinafter, also referred to as aliphatic dicarboxylic acid A). Examples of the aliphatic dicarboxylic acid A include a compound represented by Formula (3) shown below.
[Chem. 6]

HOOC-(CH₂)ₘ-COOH (3)

(In Formula (3), m is an integer of 1 or more, preferably from 4 to 18, more preferably from 6 to 16, still more preferably from 8 to 14.)

The alicyclic polyamide resin preferably has a structure represented by Formula (4) shown below. 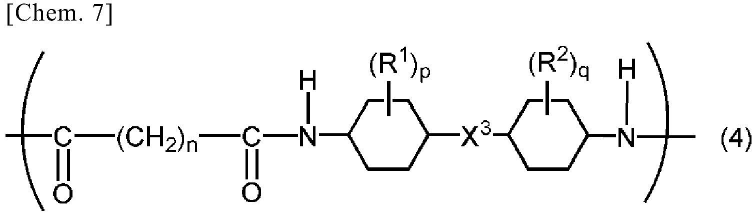 (In Formula (4), R¹ and R² each independently represent an alkyl group having carbon number of 1 to 4 (preferably 1 to 2), X³ represents an alkylene group having carbon number of 1 to 6 (preferably 1 to 4, more preferably 1 to 3), n represents an integer of 1 or more (preferably from 4 to 18, more preferably from 6 to 16, still more preferably from 8 to 14), and p and q each independently represent an integer of from 0 to 4 (preferably from 0 to 3, more preferably from 0 to 2, still more preferably from 0 to 1).)

The number-average molecular weight of the polyamide resin is not particularly limited, and it may be, for example, from 0.6 × 10⁴ to 3.0 × 10⁵, preferably from 0.6 × 10⁴ to 2.0 × 10⁵, more preferably from 1.0 × 10⁴ to 1.5 × 10⁵, still more preferably from 2.0 × 10⁴ to 1.0 × 10⁵. The number-average molecular weight of the polyamide resin can be measured by gel permeation chromatography (GPC), and can be determined in terms of polystyrene.

The thickness of the protective layer is not particularly limited, and it may be, for example, from 20.0 to 2000.0 µm, is preferably from 50.0 to 800.0 µm, more preferably from 80.0 to 600.0 µm, still more preferably from 100.0 to 500.0 µm. The thicknesses of the protective layers (the first protective layer and the second protective layer) may be the same or different.

The retardation values of the protective layers are not particularly limited, but one or more selected from the group consisting of the first protective layer and the second protective layer preferably have a retardation value of 300 nm or more, and in particular, the retardation value of the first protective layer is preferably 300 nm or more. By setting the retardation value of the first protective layer to 300 nm or more, generation of white spots in the protective layer can be suppressed. The retardation value is preferably from 300 to 20000 nm, more preferably from 350 to 15000 nm, still more preferably from 400 to 10000 nm, yet still more preferably from 450 to 5000 nm, particularly preferably from 500 to 4000 nm, yet particularly preferably from 550 to 3000 nm.

When the protective layer is formed by stretching, the retardation value is defined by Δn·d where Δn is the difference in refractive index between the refractive index in a stretching direction and the refractive index in a direction perpendicular to the stretching direction, and d is the thickness of the protective layer. The retardation value can be controlled by the stretch ratio in the production of the protective layer, the resin ejection amount, and the thickness of the protective layer.

### Adhesive Layer

The adhesive layer is not particularly limited as long as the protective layer and the polarizing layer can be adhered to each other, but is preferably a layer containing a cured product of an adhesive. The adhesive may be a solution type adhesive or a hot melt type adhesive. The method for curing the adhesive is not particularly limited, and a known method can be used. For example, in the case of a solution type adhesive, a cured product of the adhesive can be produced by volatilizing the solvent contained in the adhesive solution. In the case of a two-component curable adhesive, a cured product of the adhesive can be produced by mixing a solution containing a main agent and a solution containing a curing agent. In the case of a hot melt type adhesive, a cured product of the adhesive can be produced by cooling and solidifying the melted adhesive.

Examples of the adhesive include a vinyl acetate adhesive, an acrylic adhesive, a polyester adhesive, a urethane adhesive, and an epoxy adhesive. Among these, a urethane adhesive is preferable.

The urethane adhesive refers to an adhesive containing a polyurethane resin or an adhesive containing an isocyanate component and a diol component. That is, the urethane adhesive may be a one-component adhesive containing a polyurethane resin, or may be a two-component curable adhesive containing an isocyanate component and a diol component (that is, a reactive curable adhesive). As the isocyanate component and the diol component, a urethane prepolymer produced by reacting an isocyanate component and a diol component can also be used.

The adhesive layer may contain a single type of these materials alone or two or more types thereof in combination. The adhesive layers (the first adhesive layer and the second adhesive layer) may contain the same material or different materials.

The vinyl acetate adhesive refers to an adhesive containing a vinyl acetate resin, the acrylic adhesive refers to an adhesive containing an acrylic resin, the polyester adhesive refers to an adhesive containing a polyester resin, and the epoxy adhesive refers to an adhesive containing an epoxy resin and a curing agent.

The thickness of the adhesive layer is not particularly limited, and it may be, for example, from 0.1 to 200.0 µm, and is preferably from 1.0 to 100 µm, more preferably from 1.5 to 80.0 µm, still more preferably from 2.0 to 50.0 µm, yet still more preferably from 3.0 to 25.0 µm, particularly preferably from 5.0 to 20.0 µm, yet particularly preferably from 5.0 to 15.0 µm. The thicknesses of the adhesive layers (the first adhesive layer and the second adhesive layer) may be the same or different.

### Substrate Layer

The material used for the substrate layer is not particularly limited, but the substrate layer preferably contains a resin, more preferably contains a polyamide resin. That is, the substrate layer is more preferably a polyamide resin layer. By containing a polyamide resin layer, it is possible to form an optical lens having high lightness, toughness, and chemical resistance. As the resin, a resin described in the section of the protective layer can be used, and as the polyamide resin, a polyamide resin described in the section of the protective layer can be used.

The substrate layer may contain various additives other than the additives, for example, a plasticizer, a colorant, a flame retardant, and an antistatic agent.

The thickness of the substrate layer is not particularly limited, and it may be, for example, from 1 to 20 mm, and is preferably from 2 to 20 mm, more preferably from 3 to 10 mm, still more preferably from 3 to 5 mm.

The shape of the polarizing laminate is not particularly limited, but it may be a flat plate shape or may be curved. The method for forming the polarizing laminate into a curved shape is not particularly limited, and an example thereof is a method in which a flat plate-shaped polarizing laminate is formed, and then the polarizing laminate is subjected to bending.

### Optical Lens

The optical lens preferably includes the polarizing laminate.

The optical lens may have another layer. For example, the optical lens may have a hard coat layer, an antireflection layer, an anti-fog layer, and the like. The positions of these layers are not particularly limited as long as these layers can exhibit their functions, but these layers preferably constitute the surface of the optical lens.

The shape of the optical lens is not particularly limited, but it may be a flat plate shape or a curved shape. Specifically, the lens shape may be a concave lens shape, a convex lens shape, or an uneven lens shape. The shape of the optical lens can be adjusted by a known method, and an example thereof is a method of injection molding a polyamide resin with respect to a polarizing laminate having a curved shape.

Hereinafter, methods for measuring and evaluating physical properties of the polarizing laminate and the optical lens will be described.

### Method for Measuring Retardation Value

The retardation value of the protective layer can be measured by "KOBRA-WPR" (590 nm) manufactured by Otsuka Scientific Instruments. In the case of a laminate, a sharp cutting edge such as a cutter knife is inserted into the interface between the protective layer and the polarizing layer of the laminate to separate both layers. When the adhesive layer is attached to the protective layer, the measurement is performed with the protective layer portion to which the adhesive layer is not attached, or the adhesive layer is scraped off with a cutter knife or the like and the measurement is performed only with the resulting protective layer.

### Method for Evaluating Blocking (Test 1)

The bulk specific gravity value of the injection molding material is measured three times in accordance with JIS K-6720-2 (ISO 1060-2). Then, using the value obtained by dividing the difference between the maximum value and the minimum value among the obtained bulk specific gravity values by the arithmetic average value of three points, evaluation is performed according to the following criteria.

### Evaluation Criteria

A: The value of {(maximum value - minimum value)/arithmetic average value} × 100 is less than 10.
B: The value of {(maximum value - minimum value)/arithmetic average value} × 100 is 10 or more.

### Method for Evaluating Ultraviolet Permeability (Test 2)

Measurement was performed using a polarizing laminate having a thickness of 2 mm with a chromometer (CM5 manufactured by Konica Minolta, Inc.) in accordance with JIS K7375 (ISO 13468-2).

### Evaluation Criteria

A: The transmittance at 400 nm is 10% or less.
B: The transmittance at 400 nm is more than 10%.

### Method for Evaluating Discoloration Property (Test 3)

A laminate having a thickness of 2 mm and including no injection molding material and no polarizing layer is allowed to stand in an environment of 200°C for 30 minutes, and a color difference is measured with reflected light of a spectrophotometer (CM5 manufactured by Konica Minolta, Inc.).

### Evaluation Criteria

A: The color difference ΔE is less than 3.
B: Color difference ΔE is 3 or more.

### Scorch Evaluation Method (Test 4)

For evaluation of scorch, the size of scorch (black foreign matter or brown foreign matter) is observed by applying transmitted light to a lens using a microscope (Keyence, VHX-7000).

### Evaluation Criteria

A: Less than 3 scorches with a diameter of more than 50 µm are observed.
B: 3 or more scorches with a diameter of more than 50 µm are observed.

### Overall Determination

Determination is made according to the following criteria.
A: All the evaluation results of the above-described evaluation methods were A.
B: Among the above-described evaluation methods, one or more were evaluated as B.

Each of the configurations, a combination of the configurations, and the like in each embodiment are an example, and addition, omission, substitution, and an additional change of the configurations can be appropriately made without departing from the spirit of the present invention. The present disclosure is not limited by the embodiments and is limited only by the claims.

### Examples

Hereinafter, the present disclosure will be specifically described with reference to examples. However, the present disclosure is not limited to the following examples.

### Example 1

An alicyclic polyamide resin (TROGAMID (trade name) myCX) was heated and melted using a film extruder adjusted to 280 to 300°C. Thereafter, the sheet extruded from the T die was cooled with a cooling roll, and uniaxially stretched at a stretch ratio of 1.50 times using rolls having different rotation speeds while being reheated, whereby a polyamide sheet having a thickness of 200 µm was produced. A polyurethane adhesive (two-component adhesive, "TM-593" and "CAT-RT30" manufactured by Toyo Morton Co., Ltd. were mixed at a mass ratio of 100:15) was applied to one surface of the resulting polyamide sheet so as to have a thickness of 10 µm. The surface of the polyamide sheet coated with the adhesive was adhered to both surfaces of a polarizing film (manufactured by Nippon Kayaku Co., Ltd.) containing polyvinyl alcohol and having a thickness of about 40 µm, whereby a polarizing plate (laminate) was formed. The resulting polarizing plate was cut into a predetermined shape (a shape in which a pair of substantially quadrangular opposed edges was substantially warped outward in an arc shape) using a Thomson blade. The cut polarizing plate was preheated at about 100°C for 1 to 2 minutes, and then placed on a concave mold having a radius of curvature of 87 mm, the temperature of which was adjusted to about 100°C. Thereafter, vacuum suction was performed through a suction hole provided in the lower part of the mold, and bending was performed to produce a polarizing plate (laminate) having a curved surface shape (curved shape).

As the injection molding material, an alicyclic polyamide resin (Trogamid (trade name) myCX) was dusted with calcium stearate (manufactured by Shiraishi Calcium Kaisha, Ltd.) as the compound A in an amount of 200 ppm by mass with respect to the injection molding material to form an injection molding material.

Then, the polarizing plate having a curved surface shape was disposed on the concave surface of a lens mold installed in an injection molding machine, and the mold was closed. Thereafter, the injection molding material formed by the method described above and melt-kneaded at 280°C was injected at a pressure of 200 MPa to mold a polarizing laminate (polarizing lens).

The resulting polarizing lens was processed into a mounting lens shape by a lens processing machine to produce an optical lens in which a lens end surface after processing has a structure of the first protective layer 101/the first adhesive layer 103/the polarizing layer 105/the second adhesive layer 104/the second protective layer 102/the substrate layer 201.

The resulting polarizing laminate was evaluated based on the above-described evaluation methods and evaluation criteria. The evaluation results are shown in Table 1-1.

### Examples 2 to 60

Polarizing laminates were produced in the same manner as in Example 1 except that the content of compound A, the content of the ultraviolet absorber, and the content of the heat resistant stabilizer were changed to the values shown in Tables 1-1 and 1-2. The physical properties of the resulting polarizing laminates are shown in Tables 1-1 and 1-2.

Here, when an ultraviolet absorber or a heat resistant stabilizer was added to the injection molded resin, a material prepared by previously mixing an alicyclic polyamide resin (Trogamid (trade name) myCX) with an ultraviolet absorber (Tinuvin 326, manufactured by BASF Japan Ltd.) and/or a heat resistant stabilizer (Irganox 1010, manufactured by BASF Japan Ltd.) was melt-kneaded at 280°C using a twin-screw extruder to form cylinder-shaped resin pellets. Then, the resin pellet was dusted with calcium stearate (manufactured by Shiraishi Calcium Kaisha, Ltd.) as the compound A to form an injection molding material.

### Comparative Examples 1 to 13

Polarizing laminates were produced in the same manner as in Example 1 except that the content of compound A, the content of the ultraviolet absorber, and the content of the heat resistant stabilizer were changed to the values shown in Tables 1-1 and 1-2. The physical properties of the resulting polarizing laminates are shown in Tables 1-1 and 1-2. When an ultraviolet absorber or a heat resistant stabilizer was added to the injection-molded resin, the same method as the method described in the section of Examples 2 to 60 was used.

### [Table 1-1]

**Table 1-1**

| | Compound A | Ultraviolet absorber | Heat resistant stabilizer | Test 1 | Test 2 | Test 3 | Test 4 | Overall determination |
|---|---|---|---|---|---|---|---|---|
| Comparative Example 1 | 0 | 0 | 0 | B | B | B | B | B |
| Comparative Example 2 | 5 | 5 | 5 | B | B | B | B | B |
| Example 1 | 200 | 0 | 0 | A | A | A | A | A |
| Example 2 | 20 | 0 | 0 | A | A | A | A | A |
| Example 3 | 30 | 0 | 0 | A | A | A | A | A |
| Example 4 | 50 | 0 | 0 | A | A | A | A | A |
| Example 5 | 100 | 0 | 0 | A | A | A | A | A |
| Example 6 | 10 | 0 | 0 | A | A | A | A | A |
| Example 7 | 500 | 0 | 0 | A | A | A | A | A |
| Example 8 | 1000 | 0 | 0 | A | A | A | A | A |
| Example 9 | 3000 | 0 | 0 | A | A | A | A | A |
| Example 10 | 5000 | 0 | 0 | A | A | A | A | A |
| Example 11 | 0 | 10 | 0 | A | A | A | A | A |
| Example 12 | 0 | 30 | 0 | A | A | A | A | A |
| Example 13 | 0 | 50 | 0 | A | A | A | A | A |
| Example 14 | 0 | 100 | 0 | A | A | A | A | A |
| Example 15 | 0 | 200 | 0 | A | A | A | A | A |
| Example 16 | 0 | 500 | 0 | A | A | A | A | A |
| Example 17 | 0 | 1000 | 0 | A | A | A | A | A |
| Example 18 | 0 | 3000 | 0 | A | A | A | A | A |
| Example 19 | 0 | 5000 | 0 | A | A | A | A | A |
| Example 20 | 0 | 7000 | 0 | A | A | A | A | A |
| Example 21 | 0 | 10000 | 0 | A | A | A | A | A |
| Example 22 | 0 | 20000 | 0 | A | A | A | A | A |
| Example 23 | 0 | 30000 | 0 | A | A | A | A | A |
| Example 24 | 0 | 50000 | 0 | A | A | A | A | A |
| Example 25 | 0 | 0 | 10 | A | A | A | A | A |
| Example 26 | 0 | 0 | 15 | A | A | A | A | A |
| Example 27 | 0 | 0 | 20 | A | A | A | A | A |
| Example 28 | 0 | 0 | 30 | A | A | A | A | A |
| Example 29 | 0 | 0 | 50 | A | A | A | A | A |
| Example 30 | 0 | 0 | 100 | A | A | A | A | A |
| Example 31 | 0 | 0 | 200 | A | A | A | A | A |
| Example 32 | 0 | 0 | 500 | A | A | A | A | A |
| Example 33 | 0 | 0 | 1000 | A | A | A | A | A |
| Example 34 | 0 | 0 | 3000 | A | A | A | A | A |
| Example 35 | 0 | 0 | 5000 | A | A | A | A | A |
| Example 36 | 0 | 10 | 10 | A | A | A | A | A |

### [Table 1-2]

**Table 1-2**

| | Compound A | Ultraviolet absorber | Heat resistant stabilizer | Test 1 | Test 2 | Test 3 | Test 4 | Overall determination |
|---|---|---|---|---|---|---|---|---|
| Example 37 | 0 | 20 | 10 | A | A | A | A | A |
| Example 38 | 0 | 50 | 20 | A | A | A | A | A |
| Example 39 | 0 | 70 | 30 | A | A | A | A | A |
| Example 40 | 0 | 100 | 100 | A | A | A | A | A |
| Example 41 | 0 | 250 | 100 | A | A | A | A | A |
| Example 42 | 0 | 100 | 250 | A | A | A | A | A |
| Example 43 | 0 | 300 | 50 | A | A | A | A | A |
| Example 44 | 0 | 50 | 300 | A | A | A | A | A |
| Example 45 | 0 | 500 | 500 | A | A | A | A | A |
| Example 46 | 0 | 500 | 600 | A | A | A | A | A |
| Example 47 | 0 | 700 | 200 | A | A | A | A | A |
| Example 48 | 0 | 200 | 700 | A | A | A | A | A |
| Example 49 | 0 | 1000 | 1000 | A | A | A | A | A |
| Example 50 | 0 | 10000 | 50 | A | A | A | A | A |
| Example 51 | 0 | 50000 | 5000 | A | A | A | A | A |
| Example 52 | 10 | 10 | 10 | A | A | A | A | A |
| Example 53 | 10 | 100 | 100 | A | A | A | A | A |
| Example 54 | 10 | 300 | 100 | A | A | A | A | A |
| Example 55 | 100 | 1000 | 10 | A | A | A | A | A |
| Example 56 | 100 | 100 | 100 | A | A | A | A | A |
| Example 57 | 100 | 30000 | 0 | A | A | A | A | A |
| Example 58 | 100 | 20000 | 1000 | A | A | A | A | A |
| Example 59 | 200 | 30000 | 2000 | A | A | A | A | A |
| Example 60 | 300 | 10000 | 100 | A | A | A | A | A |
| Comparative Example 3 | 7000 | 0 | 0 | A | A | A | B | B |
| Comparative Example 4 | 0 | 70000 | 0 | A | A | B | B | B |
| Comparative Example 5 | 0 | 0 | 7000 | A | A | A | B | B |
| Comparative Example 6 | 7000 | 0 | 5000 | A | A | A | B | B |
| Comparative Example 7 | 6000 | 5000 | 3000 | A | A | A | B | B |
| Comparative Example 8 | 2000 | 50000 | 7000 | A | A | A | B | B |
| Comparative Example 9 | 10 | 60000 | 300 | A | A | B | B | B |
| Comparative Example 10 | 0 | 60000 | 7000 | A | A | B | B | B |
| Comparative Example 11 | 6000 | 0 | 6000 | A | A | A | B | B |
| Comparative Example 12 | 7000 | 60000 | 0 | A | A | B | B | B |
| Comparative Example 13 | 7000 | 60000 | 6000 | A | A | B | B | B |

In Tables 1-1 and 1-2, Compound A represents the content (ppm by mass) of stearic acid or a stearate in the injection molding material, Ultraviolet absorber represents the content (ppm by mass) of the ultraviolet absorber in the injection molding material, and Heat resistant stabilizer represents the content (ppm by mass) of the heat resistant stabilizer in the injection molding material.

### Industrial Applicability

The present disclosure can provide a polarizing laminate and an optical lens in which scorch is suppressed.

### Reference Signs List

200 Polarizing laminate, 101 First protective layer, 102 Second protective layer, 103 First adhesive layer, 104 Second adhesive layer, 105 Polarizing layer, 201 Substrate layer

## Claims

1. A polarizing laminate comprising:
a first protective layer; and
a second protective layer,
the first protective layer being laminated on a surface of a polarizing layer with an adhesive layer interposed between the polarizing layer and the first protective layer, the second protective layer being laminated on another surface of the polarizing layer with an adhesive layer interposed between the polarizing layer and the second protective layer,
wherein
the polarizing laminate includes a substrate layer,
the substrate layer contains an additive, and
the additive satisfies one or more requirements selected from the group consisting of Requirements (1) to (3) below:
Requirement (1): the additive contains one or more compound A selected from the group consisting of stearic acid and a stearate, and a content of the compound A is from 10 to 5000 ppm by mass with respect to the substrate layer;
Requirement (2): the additive contains an ultraviolet absorber, and a content of the ultraviolet absorber is from 10 to 50000 ppm by mass with respect to the substrate layer; and
Requirement (3): the additive contains a heat resistant stabilizer, and a content of the heat resistant stabilizer is from 10 to 5000 ppm by mass with respect to the substrate layer.

2. The polarizing laminate according to claim 1, wherein
the additive satisfies Requirement (2), and
the ultraviolet absorber contains one or more selected from the group consisting of a benzotriazole compound, a triazine compound, and a cyanoacrylate compound.

3. The polarizing laminate according to claim 1 or 2, wherein
the additive satisfies Requirement (3), and
the heat resistant stabilizer contains one or more selected from the group consisting of a phenol-based antioxidant, a phosphorus-based antioxidant, and a sulfur-based antioxidant.

4. The polarizing laminate according to any one of claims 1 to 3, wherein the adhesive layer is a layer containing a cured product of a urethane adhesive.

5. The polarizing laminate according to any one of claims 1 to 4, wherein the adhesive layer has a thickness of from 1.0 to 100.0 µm.

6. The polarizing laminate according to any one of claims 1 to 5, wherein one or more selected from the group consisting of the first protective layer and the second protective layer contain a polyamide resin.

7. The polarizing laminate according to claim 6, wherein the polyamide resin has a structure represented by Formula (4): 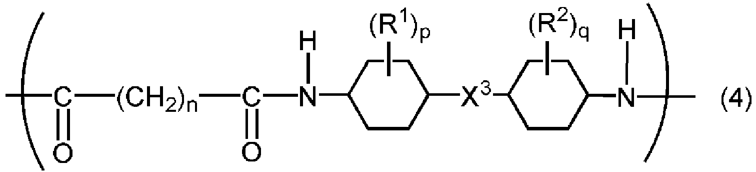 where
R¹ and R² each independently represent an alkyl group having carbon number of 1 to 4,
X³ represents an alkylene group having carbon number of 1 to 6,
n represents an integer of 1 or more, and
p and q each independently represent an integer of from 0 to 4.

8. The polarizing laminate according to any one of claims 1 to 7, wherein one or more selected from the group consisting of the first protective layer and the second protective layer have a retardation value of 300 nm or more.

9. The polarizing laminate according to any one of claims 1 to 8, wherein the polarizing layer contains polyvinyl alcohol.

10. An optical lens comprising the polarizing laminate according to any one of claims 1 to 9.

11. The optical lens according to claim 10, wherein the substrate layer contains a polyamide resin having a structure represented by Formula (4): 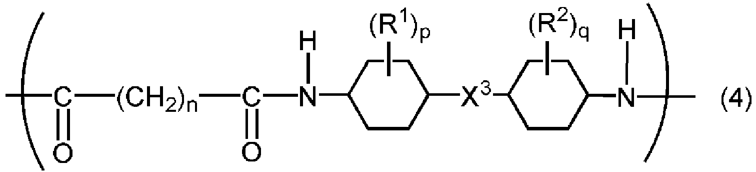 where
R¹ and R² each independently represent an alkyl group having carbon number of 1 to 4,
X³ represents an alkylene group having carbon number of 1 to 6,
n represents an integer of 1 or more, and
p and q each independently represent an integer of from 0 to 4.
